# NEUE EUROPÄISCHE PATENTSCHRIFT

(11) **EP 3 055 353 B2**
(45) Veröffentlichungstag und Bekanntmachung des Hinweises auf die Entscheidung über den Einspruch: **23.08.2023**
(45) Hinweis auf die Patenterteilung: 02.08.2017
(21) Anmeldenummer: 14783597.9
(22) Anmeldetag: 09.10.2014
(51) Int. Cl.: C08J 9/18, C08J 9/12, C08J 9/232, C08J 9/236, B29C 44/34

(54) **VERFAHREN ZUR HERSTELLUNG VON EXPANDIERTEN THERMOPLASTISCHEN ELASTOMERPARTIKELN**
METHOD FOR PRODUCING EXPANDED THERMOPLASTIC ELASTOMER PARTICLES
PROCÉDÉ DE FABRICATION DE PARTICULES D'ÉLASTOMÈRE THERMOPLASTIQUE EXPANSÉES

(30) Priorität: 11.10.2013 EP 13188373
(43) Veröffentlichungstag der Anmeldung: 17.08.2016
(73) Patentinhaber: BASF SE, 67056 Ludwigshafen am Rhein (DE)
(72) Erfinder: DÄSCHLEIN, Christian, 68199 Mannheim (DE); GUTMANN, Peter, 76199 Karlsruhe (DE); AHLERS, Jürgen, 68649 Groß-Rohrheim (DE)
(74) Vertreter: Altmann Stößel Dick Patentanwälte PartG mbB
(86) Internationale Anmeldenummer: PCT/EP2014/071595
(87) Internationale Veröffentlichungsnummer: WO 2015/052265

(56) Entgegenhaltungen:
- WO-A1-96/06129
- JP-A- H08 113 664
- DATABASE WPI Week 201358 Thomson Scientific, London, GB; AN 2013-M40337 XP002720117, -& JP 2013 159758 A (ASAHI KASEI KK) 19. August 2013 (2013-08-19)
- HOSSIENY et al.: "Effects of Glycerol Monosterate on TPUs Crystallization and its Foaming behavior", AIP CONFERENCE PROCEEDINGS, November 2014 (2014-11), pages 374-377,
- YEH et al.: "Thermoplastic polyurethane/clay nanocomposite foam made by batch foaming", Journal of Cellular Plastics, vol. 49, no. 2, 2013, pages 119-130,
- HOSSIENY et al.: "Foaming behavior of melt compounded thermoplastic polyurethane in presence of butane", SPE ANTEC 2012, April 2012 (2012-04), pages 2307-2311,
- SANIEI et al.: "Solid-State Processing and Structure of nano-cellular Thermoplastic Polyurethane foams", SPE-ANTEC 2013, 2013, pages 2687-2690,

## Beschreibung

Die Erfindung betrifft ein Verfahren zur Herstellung von expandierten thermoplastischen Elastomerpartikeln, wobei thermoplastische Elastomerpartikel von einem gasförmigen Medium umgeben sind, umfassend einen Imprägnierschritt, einen Expansionsschritt und einen Verschweißungsschritt.

Expandierte Partikel aus thermoplastischen Elastomeren, insbesondere aus thermoplastischem Polyurethan (TPU), können aufgrund der elastischen und tribologischen Eigenschaften in unterschiedlichsten Anwendungen eingesetzt werden. Expandierte Partikel, welche auch als expandiertes Granulat bezeichnet werden, können beispielsweise zur Herstellung von Körperprotektoren wie Helmschalen, Knie- und Ellenbogenschützern, von Schall- und Schwingungsdämpfern oder Verpackungen eingesetzt werden, ebenso zur Herstellung von Gymnastikmatten, Schuhsohlen, Zwischensohlen, Einlegesohlen und für den Automobilinnenraum zur Herstellung beispielsweise von Lenkrad-, Türseiten- und Fußraumteilen. Besonders bevorzugt werden die expandierten thermoplastischen Elastomerpartikel in Schuhsohlen, Zwischensohlen und Einlegesohlen in Sportschuhen eingesetzt. In allen diesen Bereichen sind eine hohe Elastizität und eine gute Homogenität der expandierten Partikel von entscheidender Bedeutung.

Expandierte Polymere, auch als Schaumstoffe bezeichnet, und insbesondere expandierte Polymerpartikel, auch Partikelschaumstoffe genannt, sind bekannt und in der Literatur vielfach beschrieben, zum Beispiel in Ullmanns "Enzyklopädie der technischen Chemie", 4. Auflage, Band 20, Seite 416 ff.

Aus der WO 2007/082838 ist ein Verfahren zur Herstellung von expandiertem treibmittelhaltigen thermoplastischen Polyurethan bekannt. Darin wird in einem ersten Schritt ein thermoplastisches Polyurethan zu einem Granulat extrudiert. In einem zweiten Schritt wird das Granulat in wässriger Suspension unter Druck mit einem Treibmittel imprägniert und in einem dritten Schritt expandiert. In einer weiteren Ausführungsform des Verfahrens wird das thermoplastische Polyurethan zusammen mit einem Treibmittel in einem Extruder aufgeschmolzen und die Schmelze ohne eine Vorrichtung, die ein Aufschäumen verhindert, granuliert. Bei der Herstellung mit Extrusionsverfahren werden als Treibmittel flüchtige organische Verbindungen verwendet.

Die EP 0664197 offenbart die Herstellung expandierter thermoplastischer Elastomere, wobei zur Vermeidung von organischen Treibmitteln Wasser als Treibmittel eingesetzt wird. Ein alternatives Verfahren zur Herstellung von Schäumen aus thermoplastischen Elastomeren unter Verwendung von Kohlendioxid und Stickstoff als Treibmittel ist zum Bespiel aus WO 2004/018551 bekannt. Ein weiteres Verfahren zur Herstellung expandierter thermoplastischer Elastomere, das auf das in der WO 2004/018551 beschriebene Verfahren zur Schaumherstellung zurückgreift, ist auch in der WO 2007/044123 offenbart.

Die JP 11 080408 offenbart ein Verfahren zur Herstellung von Schäumen auf Basis von thermoplastischen Harzen, wobei die Materialien unter erhöhtem Druck und erhöhter Temperatur mit Treibmittel imprägniert werden. Zugeschnittene Formteile werden zunächst imprägniert und dann expandiert. Auch die JP 2003 261707 offenbart eine Methode zur Herstellung von Harzschäumen. Hierbei wird Granulat imprägniert, aufgeschmolzen, gegossen und geschäumt. Zum Gießen wird ein Extruder eingesetzt.

Die WO 2005/105907 beschreibt die Herstellung von geschlossenzelligen Fluoropolymerschäumen, wobei die Harze bei erhöhtem Druck und Temperatur Inertgasen ausgesetzt sind und dann durch Druckverringerung expandiert werden. Die Harze werden vor der Expansion vernetzt.

Die US 4,331,619 beschreibt eine Schaumstoffzusammensetzung, welche ein Ethylen-Chlorotrifluorethylencopolymer, ein Treibmittel und einen Keimbildner enthält. Weiterhin ist eine Methode beschrieben, wobei das Polymer zum Imprägnieren auf Temperaturen oberhalb dessen Schmelztemperatur erwärmt wird und zur Expansion ein Extruder eingesetzt wird.

In der WO 00/43193 wird ein Verfahren zur Herstellung von mikrozellularem Polymerschaum aus amorphem, semikristallinem oder kristallinem Polymer beschrieben. Dabei werden Formkörper bei erhöhter Temperatur mit Inertgas gesättigt. Die US 4,473,665 beschreibt die Herstellung von mikrozellularem Schaum, wobei Extrusions- oder Spritzgusstechniken eingesetzt werden.

Aus der WO 02/12379 ist ein Herstellungsverfahren für geschlossenzellige vernetzte Polymerschäume bekannt, wobei Formteile, welche eine Mischungszusammensetzung mit Treibmittel und Vernetzungsvermittler enthalten, in einem Schritt expandiert und vernetzt werden.

Die EP 2217644 offenbart die Herstellung von Fluoropolymerschäumen, wobei das Polymermaterial mit Treibmitteln und Additiven gemischt, geformt und expandiert wird. Hierbei kann die Formgebung auch durch Expansion in einer Form erreicht werden. Zunächst wird ein Gemisch aus Fluorpolymerharz und Treibmittel hergestellt, wobei das Treibmittel in einem nichtgasförmigen Zustand oder in einem Zustand vorliegt, in welchem kein Gas vom Treibmittel freigesetzt wird.

Die EP 1853655 beschreibt Polyamidschaumstoffe und deren Herstellverfahren. Die Imprägnierung und Expansion wird deutlich oberhalb der Schmelztemperatur durchgeführt. Formteile können aus dem expandierten Material geformt werden oder direkt durch Expansion in einer Form hergestellt werden.

Gemäß der US 2009/0048356 wird ein Polymer, bevorzugt in Granulatform, einem Gas ausgesetzt, welches in das Polymer eindringt. Dies wird bei einer Temperatur durchgeführt, welche zwischen der Glasübergangstemperatur und der Schmelztemperatur des Polymers liegt, wenn dieses kristallin oder semikristallin ist, oder welche unterhalb der Glasübergangstemperatur liegt, wenn das Polymer ein amorphes Polymer ist. Im Folgenden wird das Polymer geschmolzen um geschäumte Artikel herzustellen. Hierbei wird das Polymer vollständig aufgeschmolzen um eine homogene Schmelze zu erzielen.

Die Herstellung von expandierten Formteilen mittels eines direkten Imprägnierprozesses, welche in den Dokumenten des Standes der Technik offenbart ist und wobei Formteile imprägniert werden, weist den Nachteil einer nicht exakten Formgebung und einer ungleichmäßigen Expansion des gesamten zu expandierenden Formteils auf, was die Komplexität der Formteile beschränkt. Weiterhin können sich die Formteile während der Expansion in nicht gewünschter Weise verformen.

Bei der direkten Herstellung von expandierten Partikeln mittels Extrusion kann sich das Problem einstellen, dass beim Expandieren der Partikel keine geschlossene Haut entsteht, und die expandierten Partikel in sich zusammenfallen, so dass Partikel mit geringer Schüttdichte nicht hergestellt werden können. Weiterhin geht die Expansion von Formteilen oder Polymerportionen, welche ein kleines Verhältnis der Oberfläche zum Volumen besitzen, häufig mit einer resultierenden inhomogenen Zellgröße einher, welche durch eine inhomogene Temperaturverteilung oder durch eine inhomogene Verteilung der Konzentration des Treibmittels im Formteil bedingt ist. Die Expansion von Partikeln in flüssigem Medium ist technisch aufwändig, da eine Abtrennung und Trocknung der Partikel erfolgen muss.

Eine Aufgabe der vorliegenden Erfindung ist es, ein Verfahren zur Herstellung von expandierten thermoplastischen Elastomerpartikeln bereit zu stellen, bei dem expandierte, geschlossenzellige, eine geschlossene Außenhaut besitzende, thermoplastische Elastomerpartikel mit geringer Dichte und homogener Zellverteilung entstehen, die aus dem Stand der Technik bekannte Nachteile nicht aufweisen und die Partikelexpansion und Formteilherstellung in einem Verfahrensschritt und in einer Apparatur möglich ist.

Gelöst wird die Aufgabe durch ein Verfahren zur Herstellung von expandierten thermoplastischen Elastomerpartikeln, wobei thermoplastische Elastomerpartikel von einem gasförmigen Medium umgeben sind, umfassend
a) einen Imprägnierschritt,
   wobei das gasförmige Medium eine Imprägniertemperatur Tₐ aufweist, der absolute Druck des gasförmigen Mediums größer als Umgebungsdruck ist und wobei ein Treibmittel in den thermoplastischen Elastomerpartikeln gelöst wird,
b) einen Expansionsschritt,
   wobei die thermoplastischen Elastomerpartikel bei einer ersten Expansionstemperatur T_{b} einer Druckreduktion ausgesetzt werden und expandieren und
c) einen Verschweißungsschritt,
   wobei die expandierten thermoplastischen Elastomerpartikel bei einer Verschweißungstemperatur T_{c} zu mindestens einem Formteil miteinander verschweißt werden und

wobei die thermoplastischen Elastomerpartikel aus amorphem thermoplastischem Elastomer oder teilkristallinem thermoplastischem Elastomer oder Mischungen daraus aufgebaut sind, die Imprägniertemperatur Tₐ, die erste Expansionstemperatur T_{b} und die Verschweißungstemperatur T_{c} von der Art des thermoplastischen Elastomers abhängig sind und
   i. wenn das thermoplastische Elastomer amorph ist, die Imprägniertemperatur Tₐ, die erste Expansionstemperatur T_{b} und die Verschweißungstemperatur T_{c} höher sind als eine erste Grenztemperatur T_{G-40}, wobei die erste Grenztemperatur T_{G-40} 40°C unterhalb der Glasübergangstemperatur T_{G} nach DIN EN ISO 113572:2013-09 der nicht imprägnierten thermoplastischen Elastomerpartikel liegt,
   ii. wenn das thermoplastische Elastomer teilkristallin ist, die Imprägniertemperatur Tₐ, die erste Expansionstemperatur T_{b} und die Verschweißungstemperatur T_{c} höher sind als die Glasübergangstemperatur T_{G} nach DIN EN ISO 11357-2:2013-09 der nicht imprägnierten thermoplastischen Elastomerpartikel und niedriger sind als eine zweite Grenztemperatur T_{S-5}, welche 5°C unterhalb der Schmelztemperatur T_{S} nach DIN EN ISO 113573:2013-04 der nicht imprägnierten thermoplastischen Elastomerpartikel liegt und
   wobei die thermoplastischen Elastomerpartikel thermoplastische Polyesterelastomere, thermoplastische Copolyamide oder thermoplastische Polyurethane oder Mischungen davon enthalten,
   wobei das Treibmittel CO₂ oder N₂ oder Mischungen davon enthält und kein weiteres Treibmittel enthält,
   dadurch gekennzeichnet, dass der Imprägnierschritt a), der Expansionsschritt b) und der Verschweißungsschritt c) in einer Apparatur durchgeführt werden.
Ähnliche Verfahren werden sowohl in der WO 96/06129 als auch in der JP 2013 159758 beschrieben. Abweichend von dem erfindungsgemäßen Verfahren bezieht sich die technische Lehre der WO 96/06129 jedoch spezifisch auf kristalline Olefinpolymerisate, die offenbar keine elastomeren Eigenschaften aufweisen, während sich die technische Lehre der JP 2013 159758 spezifisch auf einen Blend von Polystyrol mit 5 bis 30 Massen-% eines Elastomers auf der Basis von konjugierten Dienen bezieht.

Um mit dem erfindungsgemäßen Verfahren direkt zu Formteilen verschweißte expandierte thermoplastische Elastomerpartikel zu erhalten, werden die thermoplastischen Elastomerpartikel vor dem Imprägnierschritt a) in geeigneten Formen im Druckbehälter platziert.

Das Verfahren ermöglicht eine einfache Herstellung von expandierten thermoplastischen Elastomerpartikeln, welche eine niedrige Dichte, geschlossene Zellen sowie eine besonders homogene Zellverteilung aufweisen. Erfindungsgemäß werden die Imprägnierung, die Expansion und auch die Verschweißung zu mindestens einem Formteil in nur einer Apparatur durchgeführt. Ein weiterer Vorteil des erfindungsgemäßen Verfahrens besteht darin, dass auf die Verwendung von organischem Treibmittel verzichtet wird.

Die thermoplastischen Elastomerpartikel werden bevorzugt in einem Druckbehälter, zum Beispiel einem Autoklav-Reaktor, bei erhöhter Temperatur und erhöhtem Druck Treibmittel ausgesetzt, so dass die thermoplastischen Elastomerpartikel Treibmittel absorbieren. Der Expansionsschritt b) wird bevorzugt in inerter Atmosphäre durchgeführt.

Die hergestellten expandierten thermoplastischen Elastomerpartikel zeichnen sich durch eine hohe Bruchdehnung von mehr als 150%, gemessen nach DIN EN ISO 527-2:2012-06 sowie eine homogene Zellverteilung, geschlossenen Zellen und eine geschlossene Außenhaut aus. Die expandierten thermoplastischen Elastomerpartikel weisen Partikelgewichte zwischen 1 mg und 40 mg, bevorzugt zwischen 2 mg und 35 mg und besonders bevorzugt zwischen 10 mg und 35 mg auf. Die Größe der Zellen der expandierten thermoplastischen Elastomerpartikel, welche erfindungsgemäß hergestellt werden, ist kleiner als 350 µm, bevorzugt kleiner als 100 µm. Die maximale Ausdehnung der einzelnen expandierten thermoplastischen Elastomerpartikel liegt vorzugsweise im Bereich von 2 mm bis 15 mm, insbesondere im Bereich von 5 mm bis 12 mm.

Der für den Imprägnierschritt a) und den Expansionsschritt b) erforderliche Druck und die notwendige Temperatur sind abhängig von dem verwendeten thermoplastischen Elastomer, den verwendeten Hilfsstoffen, den verwendeten Treibmitteln und den Mischungsverhältnissen der Komponenten zueinander.

Der Druck des gasförmigen Mediums im Imprägnierschritt a) ist abhängig von der gewünschten Druckabfallrate und liegt zwischen 1 bar und 1000 bar, bevorzugt zwischen 50 bar und 700 bar, insbesondere bevorzugt zwischen 200 bar und 600 bar.

Die Dauer des Imprägnierschrittes a) hängt von mehreren Faktoren ab, insbesondere dem Material und der Größe der Partikel, der Temperatur und dem Druck im Druckbehälter. Bevorzugt dauert der Imprägnierschritt a) so lange an, bis die thermoplastischen Elastomerpartikel mit Treibmitteln gesättigt sind. Die Sättigung der thermoplastischen Elastomerpartikel lässt sich durch einen iterativen Wiegeprozess bestimmen, beispielsweise mittels einer Magnetschwebewaage.

Das als Treibmittel eingesetzte CO₂ wird besonders bevorzugt in Form eines Gemisches mit N₂ eingesetzt. Hierbei ist zunächst jedes beliebige Mischungsverhältnis von CO₂ zu N₂ möglich. Bevorzugt ist es jedoch, als Treibmittel ein Gemisch aus Kohlendioxid und Stickstoff einzusetzen, das 50 Gew.-% bis 100 Gew.-% Kohlendioxid und 0 Gew.-% bis 50 Gew.-% Stickstoff enthält. Erfindungsgemäß enthält das Treibmittel nur CO₂, N₂ oder eine Mischung aus diesen beiden Gasen und kein weiteres Treibmittel.

Bevorzugt wird ein physikalisches Treibmittel eingesetzt. Der alleinige Einsatz von CO₂ und/oder N₂ sowie deren Kombination als Treibmittel ist besonders vorteilhaft, da sie unbrennbar sind, so dass bei der Produktion keine explosionsfähigen Atmosphären entstehen können. Dadurch werden kostenintensive Sicherheitsvorkehrungen unnötig und das Gefahrenpotential bei der Herstellung stark reduziert. Ebenfalls vorteilhaft ist, dass keine Auslagerzeit der Produkte aufgrund des Ausdampfens von flüchtigen brennbaren Stoffen erforderlich ist.

Der eingestellte Treibmittelgehalt liegt zwischen 0,1 Gew.-% und 20 Gew.-%, bevorzugt zwischen 0,5 Gew.-% und 15 Gew.-%, besonders bevorzugt zwischen 2 Gew.-% und 10 Gew.-%. Dadurch lassen sich bei richtiger Prozesssteuerung direkt Formteile mit Dichten zwischen 30 und 500 g/l, bevorzugt 50 g/l und 250 g/l, insbesondere zwischen 75 g/l und 210 g/l durch Verschweißen in mindestens einer Form aus diesen expandierten Partikel herstellen.

Bei der Expansion der thermoplastischen Elastomerpartikel sind Druck und Temperatur wählbare Prozessparameter. Eine geringe Druckabfallrate oder ein erhöhter verbleibender Druck nach der Druckreduktion wirkt der Expansionswirkung des Treibmittels entgegen und bremst die Expansion der thermoplastischen Elastomerpartikel. Je geringer die Temperaturen im Verfahren gewählt werden, desto dicker ist eine Haut der Partikel, die der Expansion Widerstand bietet. Bei einem im Verhältnis zum verwendeten Treibmittel zu hohen Druck oder einer zu niedrigen Temperatur kann eine Expansion der thermoplastischen Elastomerpartikel behindert oder gar vollständig unterbunden werden, so dass expandierte thermoplastische Elastomerpartikel mit zu großer Schüttdichte entstehen. In diesem Fall sollte der Druck und/oder die Temperatur im Expansionsschritt b) erhöht werden.

Im Expansionsschritt b) wird die Temperatur bevorzugt so lange auf der ersten Expansionstemperatur T_{b} gehalten, bis die gewünschte Expansion erreicht ist. Der Fortschritt der Expansion kann mittels der Druckabfallrate der Druckreduktion kontrolliert werden, welche zwischen 50 bar/s und 5000 bar/s, bevorzugt zwischen 100 bar/s und 1000 bar/s, beträgt. Eine Reduktion des Druckes mit Druckabfallraten aus diesen genannten Bereichen wird im Rahmen der Erfindung auch als schlagartiger Druckabbau bezeichnet.

Die Verweilzeit im Druckbehälter, also die Dauer des Imprägnierschrittes a) und des Expansionsschrittes b) und des Verschweißungsschrittes c) beträgt zwischen 0,25 Stunden und 12 Stunden, bevorzugt zwischen 1 Stunde und 6 Stunden.

Die thermoplastischen Elastomerpartikel sind aus amorphem thermoplastischem Elastomer oder aus teilkristallinem thermoplastischem Elastomer oder aus Mischungen daraus aufgebaut. Der Bereich der gewählten Temperaturen des gasförmigen Mediums während des Imprägnierschrittes a) (Imprägniertemperatur Tₐ) und des Expansionsschrittes b) (erste Expansionstemperatur T_{b}) ist bei amorphen thermoplastischen Elastomeren von der Glasübergangstemperatur T_{G} und bei teilkristallinen thermoplastischen Elastomeren von der Schmelztemperatur T_{S} des nichtimprägnierten thermoplastischen Elastomers abhängig. Als Glasübergangstemperatur T_{G} wird im Rahmen der Erfindung die Temperatur verstanden, welche nach DIN EN ISO 11357-2:2013-09 definiert ist. Als Schmelztemperatur teilkristalliner thermoplastischer Elastomere wird im Rahmen der Erfindung die Temperatur bezeichnet, welche nach DIN EN ISO 11357-3:2013-04 definiert ist. Wenn die thermoplastischen Elastomerpartikel aus amorphem thermoplastischen Elastomer aufgebaut sind, sind die Imprägniertemperatur Tₐ, die erste Expansionstemperatur T_{b}, und die Verschweißungstemperatur T_{c} höher als die erste Grenztemperatur T_{G-40}, die 40°C unterhalb der Glasübergangstemperatur T_{G} der nicht imprägnierten thermoplastischen Elastomerpartikel liegt. Wenn die thermoplastischen Elastomerpartikel aus teilkristallinem thermoplastischen Elastomer aufgebaut sind, sind die Imprägniertemperatur Tₐ, die erste Expansionstemperatur T_{b}, und die Verschweißungstemperatur T_{c} höher als die Glasübergangstemperatur T_{G} der nicht imprägnierten thermoplastischen Elastomerpartikel und niedriger als die zweite Grenztemperatur T_{S-5}, die 5°C unterhalb der Schmelztemperatur T_{S} der nicht imprägnierten thermoplastischen Elastomerpartikel liegt. Wenn die thermoplastischen Elastomerpartikel aus einer Mischung aus amorphem und teilkristallinem thermoplastischen Elastomer aufgebaut sind und die gemischten thermoplastischen Elastomere mit einander homogen mischbar sind, sind die Imprägniertemperatur Tₐ, die erste Expansionstemperatur T_{b}, und die Verschweißungstemperatur T_{c} höher als die erste Grenztemperatur T_{G-40} und bevorzugt höher als die Glasübergangstemperatur T_{G} der nicht imprägnierten thermoplastischen Elastomerpartikel und niedriger als die zweite Grenztemperatur T_{S-5}. Wenn die thermoplastischen Elastomerpartikel aus einer Mischung aus amorphem und teilkristallinem thermoplastischem Elastomer aufgebaut sind und die gemischten thermoplastischen Elastomere nicht mit einander homogen mischbar sind, so entsprechen die Temperaturen für die Mischung den Temperaturen für eine Matrixphase der heterogenen Mischung. Die Matrixphase kann amorph oder teilkristallin sein.

Die Imprägniertemperatur Tₐ, die erste Expansionstemperatur T_{b}, und die Verschweißungstemperatur T_{c} können gleich sein oder sich voneinander unterscheiden. Der Verschweißungsschritt c) kann simultan zum Expansionsschritt b) erfolgen. In diesem Fall sind die erste Expansionstemperatur T_{b} und die Verschweißungstemperatur T_{c}.

Erfindungsgemäß werden die thermoplastischen Elastomerpartikel vor dem Imprägnierschritt a) in mindestens eine dem gewünschten Formteil konturnahe, perforierte Form gelegt, sodass die thermoplastischen Elastomerpartikel in der Apparatur zu mindestens einem fertigen Formteil verarbeitet werden können. Die Menge an thermoplastischen Elastomerpartikeln in der mindestens einen Form wird hierbei bevorzugt so bemessen, dass die expandierten thermoplastischen Elastomerpartikel die mindestens eine Form nach der Expansion vollständig ausfüllen. Durch die verwendete Menge an thermoplastischen Elastomerpartikeln kann die Dichte des mindestens einen Formteils beeinflusst werden. Hierbei führt eine größere Menge an thermoplastischen Elastomerpartikeln in der Form zu einer höheren Dichte des produzierten Formteils.

In einer weiteren Ausführungsform können die thermoplastischen Elastomerpartikel vor dem Imprägnierschritt a) über in der Literatur bekannte Methoden teilvernetzt werden, wobei unter Vernetzungen Langkettenverzweigungen verstanden werden und nur in dem Maße teilvernetzt wird, dass die thermoplastischen Eigenschaften erhalten bleiben. Dies kann vorteilhaft für die Herstellung insbesondere von expandierten thermoplastischen Elastomerpartikeln sein, welche im Wesentlichen teilkristalline thermoplastische Elastomere enthalten. Die Vernetzung kann zum Beispiel durch Einsatz von Vernetzungsreagenzien, beispielweise Triallylcyanurate oder O-O-labilen Verbindungen, oder durch den Einsatz von Elektronen oder Gammastrahlen erreicht werden. Wenn Gammastrahlen eingesetzt werden, liegen typische Strahlungsdosen zum Vernetzen im Bereich von 5 kGy bis 200 kGy, bevorzugt 25 kGy bis 100 kGy. Bevorzugt wird die Vernetzung ohne den Einsatz von Vernetzungsreagenzien erreicht.

Mit dem erfindungsgemäßen Verfahren werden Formteile aus expandierten thermoplastischen Elastomerpartikeln hergestellt, wobei die thermoplastischen Elastomere thermoplastische Polyesterelastomere wie Polyetherester und Polyesterester, thermoplastische Copolyamide wie Polyethercopolyamide, oder thermoplastische Polyurethane oder Mischungen davon enthalten.

Darüber hinaus können auch Blends der hier genannten Systeme eingesetzt werden.

Die Herstellung der eingesetzten thermoplastischen Elastomerpartikel erfolgt bevorzugt durch Extrusion.

Der Schmelzpunkt der bevorzugt eingesetzten thermoplastischen Elastomere liegt vorzugweise unterhalb von 300°C, bevorzugt bei maximal 250°C und insbesondere bei maximal 220°C. Die Bruchdehnung bevorzugt eingesetzter thermoplastischen Elastomere ist größer als 100% gemessen nach DIN EN ISO 527-2:2012-06, bevorzugt größer als 150 % und besonders bevorzugt größer als 200%.

Die bevorzugt eingesetzten thermoplastischen Elastomere können teilkristallin oder amorph sein.

Weiterhin können die mit dem erfindungsgemäßen Verfahren hergestellten, expandierten Partikel in wirksamen Mengen Zusatzstoffe wie Farbstoffe, Pigmente, Füllstoffe, Flammschutzmittel, Synergisten für Flammschutzmittel, Antistatika, Stabilisatoren, oberflächenaktive Substanzen, Weichmacher und IR-Trübungsmittel enthalten. Der Anteil der Zusatzstoffe an der Gesamtmasse der thermoplastischen Partikel liegt vorzugsweise bei 0 bis 80 Gew.-%.

Zur Reduktion des Strahlungsbeitrags zur Wärmeleitfähigkeit können die thermoplastischen Elastomerpartikel IR-Trübungsmittel wie Metalloxide, Nichtmetalloxide, Metallpulver, z. B. Aluminiumpulver, Kohlenstoff, z. B. Ruß, Graphit, Diamant, oder organische Farbstoffe und Farbstoffpigmente enthalten, was besonders für Anwendungen bei hohen Temperaturen vorteilhaft ist. Besonders bevorzugt sind Ruß, Titandioxid, Eisenoxide oder Zirkondioxid. Die vorstehend genannten Materialien können sowohl jeweils alleine als auch in Kombination, d. h. in Form einer Mischung aus mehreren Materialien, Verwendung finden. Wenn Füllstoffe eingesetzt werden, so können diese anorganisch und/oder organisch sein.

Weitere Zusatzstoffe und Hilfsstoffe können Standardwerken wie beispielsweise dem bereits vorstehend genannten Gerhard W. Becker und Dietrich Braun, Kunststoffhandbuch, Band 7 "Polyurethane", Carl Hanser Verlag, München, Wien, 1993, entnommen werden.

Geeignete Flammschutzmittel sind beispielsweise Tricresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)ethylendiphosphat. Außer den bereits genannten halogensubstituierten Phosphaten können auch anorganische Flammschutzmittel mit rotem Phosphor, Aluminiumoxidhydrat, Antimontrioxid, Arsentrioxid, Ammoniumpolyphosphat und Calciumsulfat oder Cyanursäurederivate, beispielsweise Melamin oder Mischungen aus mindestens zwei Flammschutzmitteln, zum Beispiel Ammoniumphosphat und Melamin sowie gegebenenfalls Stärke und/oder Blähgraphit zum Flammfestmachen der hergestellten expandierten Polyurethane verwendet werden. Im Allgemeinen hat es sich als zweckmäßig erwiesen, 0 bis 50 Gew.-%, vorzugsweise 5 bis 25 Gew.-% der Flammschutzmittel oder Flammschutzmittelmischungen bezogen auf das Gesamtgewicht der treibmittelhaltigen thermoplastischen Partikel, einzusetzen.

Durch die Verwendung eines Nukleierungsmittels können die Zellen gezielt beim Expandieren ausgebildet werden und es entsteht ein gleichmäßiger expandierter Partikel. Insbesondere lässt sich durch die Verwendung des Nukleierungsmittels eine gleichmäßige Zellstruktur erzeugen. Als Nukleierungsmittel werden vorzugsweise Pulver mit einer mittleren Korngröße im Bereich von 0,01 µm bis 100 µm eingesetzt.

Als Nukleierungsmittel eignen sich insbesondere Talkum, Ruß, Graphit und Pigmente jeweils einzeln oder auch in beliebigen Mischungen. Besonders bevorzugt als Nukleierungsmittel ist Talkum. Der Anteil an Nukleierungsmittel bezogen auf die Gesamtmasse der thermoplastischen Partikel bzw. der Polymerschmelze liegt vorzugsweise bei 0 Gew.-% bis 4 Gew.-%, insbesondere bei 0,1 Gew.-% bis 2 Gew.-%.

Wenn ein thermoplastisches Polyurethan verwendet wird, so kann das thermoplastische Polyurethan jedes beliebige, dem Fachmann bekannte thermoplastische Polyurethan sein. Thermoplastische Polyurethane und Verfahren zu deren Herstellung sind bereits vielfach beschrieben, beispielsweise in Gerhard W. Becker und Dietrich Braun, Kunststoffhandbuch, Band 7, "Polyurethane", Carl Hanser Verlag, München, Wien, 1993.

Bevorzugt wird das thermoplastische Polyurethan durch Umsetzung aus einer Mischung von Isocyanaten mit gegenüber Isocyanaten reaktiven Verbindungen, bevorzugt mit einem Molekulargewicht von 0,5 kg/mol bis 10 kg/mol und gegebenenfalls Kettenverlängerungsmitteln, bevorzugt mit einem Molekulargewicht von 0,05 kg/mol bis 0,5 kg/mol hergestellt. In einer weiteren bevorzugten Ausführungsform wird zur Herstellung des thermoplastischen Polyurethans der Mischung weiterhin mindestens ein Kettenregler, ein Katalysator und gegebenenfalls mindestens ein Füll-, Hilfs- und/oder Zusatzstoff zugesetzt.

Zur Herstellung von thermoplastischem Polyurethan wird auf jeden Fall eine Mischung aus Isocyanaten und gegenüber Isocyanaten reaktiven Verbindungen benötigt. Der weitere Zusatz der Kettenverlängerungsmittel, Kettenregler, Katalysatoren und Füll-, Hilfs- und/oder Zusatzstoffe ist optional und kann einzeln oder in allen möglichen Variationen erfolgen.

In bevorzugten Ausführungsformen werden als organische Isocyanate aliphatische, cycloaliphatische, arylaliphatische und/oder aromatische Isocyanate eingesetzt. Besonders bevorzugt werden aromatische, aliphatische und/oder cycloaliphatische Diisocyanate verwendet. Beispiele für bevorzugte Diisocyanate sind Trimethylendiisocyanat, Tetramethylendiisocyanat, Pentamethylendiisocyanat, Hexamethylendiisocyanat, Heptamethylendiisocyanat, Octamethylendiisocyanat; 2-Mehtylpentamethylendiisocyanat-1,5; 2-Ethylbutylendiisocyanat-1,4; Pentamethylendiisocyanat-1,5; Butylendiisocyanat-1,4; 1-Isocyanato-3,3,5-trimethyl-5-isocyanatomethylcyclohexan; 1,4-Bis(isocyanatomethyl)cyclohexan; 1,3-Bis(isocyanatomethyl)cyclohexan; 1,4-Cyclohexandiisocyanat; 1-Methyl-2,4-cyclohexandiisocyanat, 1-Methyl-2,6-cyclohexandiisocyanat, 2,2'-Dicyclohexylmethandiisocyanat, 2,4'-Dicyclohexylmethandiisocyanat, 4,4'-Dicyclohexylmethandiisocyanat, 2,2'-Diphenylmethandiisocyanat; 2,4'-Diphenylmethandiisocyanat, 4,4'-Diphenylmethandiisocyanat; 1,5-Naphthylendiisocyanat; 2,4-Toluylendiisocyanat; 2,6-Toluylendiisocyanat; Diphenylmethandiisocyanat; 3,3'-Dimethyldiphenyl-diisocyanat; 1,2-Diphenylethandiisocyanat und Phenylendiisocyanat.

Neben dem Isocyanat ist die thermoplastische Formmasse aufgebaut aus einer Verbindung mit mindestens zwei mit Isocyanatgruppen reaktiven wasserstoffhaltigen Gruppen. Hierbei ist die mit der Isocyanatgruppe reaktive wasserstoffhaltige Gruppe vorzugsweise eine Hydroxylgruppe. Besonders bevorzugt ist die Verbindung mit mindestens zwei mit Isocyanatgruppen reaktiven wasserstoffhaltigen Gruppen ausgewählt aus Polyetherol, Polyesterol und Polycarbonatdiol. Hierbei werden Polyesterole, Polyetherole und/oder Polycarbonatdiole üblicherweise auch unter dem Begriff "Polyole" zusammengefasst.

Bevorzugt wird zur Herstellung des thermoplastischen Polyurethans Polyetheralkohol eingesetzt. Hierbei wird besonders bevorzugt Polyetherdiol verwendet. Ein besonders bevorzugtes Polyetherdiol ist Polytetrahydrofuran. Bevorzugt werden die Polyetheralkohole, zum Beispiel das Polytetrahydrofuran, mit einem Molekulargewicht zwischen 0,6 kg/mol und 2,5 kg/mol verwendet. Die Polyetheralkohole werden einzeln oder auch als Mischung verschiedener Polyetheralkohole eingesetzt.

In einer alternativen Ausführungsform wird zur Herstellung des thermoplastischen Polyurethans ein Polyesteralkohol verwendet. In einer bevorzugten Ausführungsform wird hierfür Polyesterdiol verwendet. Ein bevorzugtes Polyesterdiol wird aus Adipinsäure und Butan-1,4-diol hergestellt. Bevorzugte Ausführungsformen der Polyesteralkohole weisen ein Molekulargewicht zwischen 0,6 kg/mol und 2,5 kg/mol auf.

In weiter bevorzugten Ausführungsformen haben die zur Herstellung des thermoplastischen Polyurethans eingesetzten Polyole Molekulargewichte von 0,5 kg/mol bis 8 kg/mol, mehr bevorzugt von 0,6 kg/mol bis 6 kg/mol und insbesondere von 0,8 kg/mol bis 4 kg/mol. In weiter bevorzugten Ausführungsformen weisen die Polyole eine mittlere Funktionalität von 1,8 bis 2,3, weiter bevorzugt von 1,9 bis 2,2 und insbesondere von 2 auf. In einer besonders bevorzugten Ausführungsform ist das Polyol ein Polyesteralkohol, bevorzugt aus Polytetrahydrofuran synthetisiert und hat in einer weiter bevorzugten Ausführungsform ein Molekulargewicht zwischen 0,6 kg/mol und 2,5 kg/mol.

Wenn zur Herstellung des thermoplastischen Polyurethans Kettenverlängerer eingesetzt werden, so sind diese vorzugsweise aliphatische, aromatische und/oder cycloaliphatische Verbindungen, die in weiter bevorzugten Ausführungsformen ein Molekulargewicht von 0,05 kg/mol bis 0,5 kg/mol haben. Die Kettenverlängerer sind zum Beispiel Verbindungen mit zwei funktionellen Gruppen, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Octa-, Nona- und/oder Decaalkylenglykole mit 3 bis 8 Kohlenstoffatomen und entsprechende Oligo- und/oder Polypropylenglykole. In weiteren Ausführungsformen zur Herstellung des thermoplastischen Polyurethans werden Mischungen der Kettenverlängerer eingesetzt.

Wenn Kettenregler eingesetzt werden, so weisen diese üblicherweise ein Molekulargewicht von 0,03 kg/mol bis 0,5 kg/mol auf. Kettenregler sind Verbindungen, die gegenüber Isocyanaten nur eine funktionelle Gruppe aufweisen. Beispiele für Kettenregler sind monofunktionelle Alkohole, monofunktionelle Amine, bevorzugt Methylamin und/oder monofunktionelle Polyole. Durch Kettenregler kann das Fließverhalten der Gemische aus den einzelnen Komponenten gezielt eingestellt werden. Kettenregler werden in bevorzugten Ausführungsformen in einer Menge von 0 Gew.-Teile bis 5 Gew.-Teile, weiter bevorzugt von 0,1 Gew.-Teile bis 1 Gew.-Teile, bezogen auf 100 Gew.-Teile der Verbindung mit mindestens zwei mit Isocyanatgruppen reaktiven wasser-stoffhaltigen Gruppen eingesetzt. Kettenregler werden in Ergänzung zu Kettenverlängerern oder anstelle dieser eingesetzt.

In weiteren Ausführungsformen wird zur Herstellung des thermoplastischen Polyurethans mindestens ein Katalysator verwendet, der insbesondere die Reaktion zwischen den Isocyanatgruppen der Diisocyanate und den gegenüber Isocyanaten reaktiven Verbindungen, bevorzugt Hydroxylgruppen, der Verbindung mit mindestens zwei mit Isocyanatgruppen reaktiven wasserstoffhaltigen Gruppen, der Kettenregler und der Kettenverlängerer beschleunigt. In bevorzugten Ausführungsformen ist der Katalysator ausgewählt aus der Gruppe der tertiären Amine, beispielsweise Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche Substanzen. In weiteren bevorzugten Ausführungsformen ist der mindestens eine Katalysator aus der Gruppe der organischen Metallverbindungen ausgewählt und ist, exemplarisch genannt, Titansäureester, eine Eisenverbindung, beispielsweise Eisen-(III)acetylacetonat, eine Zinnverbindung, beispielsweise Zinndiacetat, Zinndioctoat, Zinndilaurat oder ein Zinndialkylsalz einer aliphatischen Carbonsäure wie Dibutylzinndiacetat, Dibutylzinndilaurat oder ähnliche.

In einigen Ausführungsformen werden die Katalysatoren einzeln eingesetzt, in weiteren Ausführungsformen werden Mischungen von Katalysatoren verwendet. In einer bevorzugten Ausführungsform wird als Katalysator eine Mischung von Katalysatoren in Mengen von 0,0001 Gew.-% bis 0,1 Gew.-%, bezogen auf die Verbindung mit mindestens zwei mit Isocyanatgruppen reaktiven wasserstoffhaltigen Gruppen, bevorzugt der Polyhydroxylverbindung, eingesetzt.

Neben Katalysatoren, aber auch ohne die Verwendung von Katalysatoren, können den Isocyanaten und der Verbindung mit mindestens zwei mit Isocyanatgruppen reaktiven wasserstoffhaltigen Gruppen zur Herstellung des thermoplastischen Polyurethans auch Hydrolyseschutzmittel, beispielsweise Polymere und niedermolekulare Carbodiimide hinzugefügt werden.

In einer weiteren Ausführungsform kann das thermoplastische Polyurethan eine Phosphorverbindung enthalten. In einer bevorzugten Ausführungsform werden als Phosphorverbindungen Organophosphorverbindungen des trivalenten Phosphors, beispielsweise Phosphite und Phosphonite, verwendet. Beispiele für geeignete Phosphorverbindungen sind Triphenylphosphite, Diphenylalkylphosphit, Phenyldialkylphosphit, Tris-(Nonylphenyl)phosphit, Trilaurylphosphit, Trioctadecylphosphit, Distearylpentaerythritoldisphosphit, Tris-(2,4-Di-tert-butylphenyl)phosphit, Diisodecylpentaerythritoldiphosphit, Di-(2,4-Di-tert-butylphenyl)pentaerythritoldiphosphit, Tristearylsorbitoltriphosphit, Tetrakis-(2,4-di-tert-butylphenyl)-4,4'-diphenylylendiphosphonit, Triisodecylphosphit, Diisodecylphenylphosphit und Diphenylisodecylphosphit oder Gemische daraus.

Besonders bevorzugte Ausführungsformen enthalten Phosphorverbindungen, die schwer zu hydrolysieren sind, da die Hydrolyse einer Phosphorverbindung zur korrespondierenden Säure zu einer Schädigung des Polyurethans, insbesondere des Polyesterurethans führen kann. Dementsprechend sind insbesondere für Polyesterurethane Phosphorverbindungen geeignet, die besonders schwer hydrolysieren. Bevorzugte Ausführungsformen schwer hydrolysierbarer Phosphorverbindungen sind Dipolypropylenglykolphenylphosphit, Diisodecylphosphit, Triphenylmonodecylphosphit, Triisononylphosphit, Tris-(2,4-di-tert-butylphenyl)phosphit, Tetrakis-(2,4-di-tert-butylphenyl)-4,4'-diphenylylendiphosphonit und Di-(2,4-di-tert-butylphenyl)-pentaeryhtritoldiphosphit oder Gemische davon.

Zur Einstellung der Shore-Härte von thermoplastischen Polyurethanen können die Verbindungen mit mindestens zwei mit Isocyanatgruppen reaktiven wasserstoffhaltigen Gruppen und die Kettenverlängerer in relativ breiten molaren Verhältnissen variiert werden. In bevorzugten Ausführungsformen verhält sich das molare Verhältnis der Verbindungen mit mindestens zwei mit Isocyanatgruppen reaktiven wasserstoffhaltigen Gruppen zum insgesamt eingesetzten Kettenverlängerer wie 10:1 bis 1:10, bevorzugt 5:1 bis 1:8, weiter bevorzugt wie 1:1 bis 1:4, wobei die Härte des thermoplastischen Polyurethans mit zunehmendem Gehalt an Kettenverlängerer ansteigt. Auf diese Weise können Shore-Härten von A44 bis D80 eingestellt werden. Besonders bevorzugt sind Shore-Härten von A44 bis A99, insbesondere von A44 bis A96. Die Shore-Härten werden bestimmt nach der DIN 53505:1987-06.

In weiter bevorzugten Ausführungsformen erfolgt die Umsetzung zum thermoplastischen Polyurethan bei üblichen Kennzahlen. Die Kennzahl ist definiert durch das Verhältnis der insgesamt bei der Umsetzung eingesetzten Isocyanatgruppen des aromatischen, aliphatischen und/oder cycloaliphatischen Diisocyanats zu den gegenüber Isocyanaten reaktiven Gruppen, d.h. den aktiven Wasserstoffen der Verbindung mit mindestens zwei mit Isocyanatgruppen reaktiven wasserstoffhaltigen Gruppen und der Kettenverlängerer. Bei einer Kennzahl von 100 kommt auf eine Isocyanatgruppe des aromatischen, aliphatischen und/oder cycloaliphatischen Diisocyanats ein aktives Wasserstoffatom, d.h. eine gegenüber Isocyanaten reaktive Funktion der Verbindung mit mindestens zwei mit Isocyanatgruppen reaktiven wasserstoffhaltigen Gruppen und der Kettenverlängerer. Bei Kennzahlen über 100 liegen mehr Isocyanatgruppen als gegenüber Isocyanaten reaktive Gruppen, beispielsweise Hydroxylgruppen vor.

In besonders bevorzugten Ausführungsformen erfolgt die Umsetzung zum thermoplastischen Polyurethan bei einer Kennzahl zwischen 60 und 120, weiter bevorzugt bei einer Kennzahl zwischen 80 und 110.

Werden thermoplastische Polyetherester und/oder Polyesterester eingesetzt, so können diese nach allen gängigen, literaturbekannten Verfahren durch Umesterung bzw. Veresterung von aromatischen und aliphatischen Dicarbonsäuren mit 4 bis 20 C-Atomen bzw. deren Estern mit geeigneten aliphatischen und aromatischen Di- und Polyolen hergestellt werden (vgl. bspw. "Polymer Chemistry", Interscience Publ., New York, 1961, S.111-127; Kunststoffhandbuch, Band VIII, C. Hanser Verlag, München 1973 und Journal of Polymer Science, Part A1, 4, Seiten 1851-1859 (1966)).

Geeignete aromatische Dicarbonsäuren sind unter anderem zum Beispiel Phthalsäure, Iso- und Terephthalsäure bzw. deren Ester. Geeignete aliphatische Dicarbonsäuren sind unter anderem zum Beispiel Cyclohexan-1,4-Dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte Dicarbonsäuren.

Als Diolkomponente eignen sich beispielsweise:
- Diole der allgemeinen Formel HO-(CH₂)ₙ-OH, mit n = 2 bis 20, wie Ethylenglykol, Propandiol-(1,3), Butandiol-(1,4) oder Hexandiol-(1,6),
- Polyetherole der allgemeinen Formel HO-(CH₂)ₙ-O-(CH₂)ₘ-OH, wobei n gleich oder ungleich m und n bzw. m = 2 bis 20,
- ungesättigte Diole und Polyetherole wie bspw. Butendiol-(1,4),
- Diole und Polyetherole enthaltened aromatische Einheiten,
- Polyesterole.

Neben den genannten Carbonsäuren bzw. deren Estern sowie den genannten Alkoholen können alle weiteren gängigen Vertreter dieser Verbindungsklassen zur Bereitstellung der bevorzugt eingesetzten Polyetherester und Polyesterester verwendet werden.

Hartphasen werden üblicherweise aus aromatischen Dicarbonsäuren und kurzkettigen Diolen gebildet, Weichphasen aus vorgebildeten aliphatischen, difunktionellen Polyestern mit einem Molekulargewicht zwischen 500 g/mol und 3000 g/mol.

Die thermoplastischen Polyetheramide können nach allen gängigen, literaturbekannten Verfahren durch Reaktion von Aminen und Carbonsäuren bzw. deren Estern oder anderen Derivaten erhalten werden. Amine und/oder Carbonsäure enthalten hierbei zudem Ethereinheiten des Typs R-O-R, wobei R ein aliphatischer und/oder aromatischer organischer Rest ist. Im Allgemeinen werden Monomere der folgenden Verbindungsklassen eingesetzt:
- HOOC-R'-NH₂, wobei R' aromatisch und aliphatisch, bevorzugt enthaltend Ethereinheiten des Typs R-O-R, sein kann, wobei R ein aliphatischer und/oder aromatischer organischer Rest ist,
- aromatische Dicarbonsäuren, unter anderem zum Beispiel Phthalsäure, Iso- und Terephthalsäure bzw. deren Ester sowie aromatische Dicarbonsäuren enthaltend Ethereinheiten des Typs R-O-R, wobei R ein aliphatischer und/oder aromatischer organischer Rest ist,
- aliphatische Dicarbonsäuren, unter anderem zum Beispiel Cyclohexan-1,4-Dicarbonsäure, Adipinsäure, Sebacinsäure, Azelainsäure und Decandicarbonsäure als gesättigte Dicarbonsäuren sowie Maleinsäure, Fumarsäure, Aconitsäure, Itoconsäure, Tetrahydrophthalsäure und Tetrahydroterephthalsäure als ungesättigte sowie aliphatische Dicarbonsäuren enthaltend Ethereinheiten des Typs R-O-R, wobei R ein aliphatischer und/oder aromatischer organischer Rest ist,
- Diamine der allgemeinen Formel H₂N-R"-NH₂, wobei R" aromatisch und aliphatisch, bevorzugt enthaltend Ethereinheiten des Typs R-O-R, wobei R ein aliphatischer und/oder aromatischer organischer Rest ist, sein kann;
- Lactame, bspw. ε-Caprolactam, Pyrrolidon oder Laurolactam,
- Aminosäuren.
Neben den genannten Carbonsäuren bzw. deren Estern sowie den genannten Aminen, Lactamen und Aminosäuren können alle weiteren gängigen Vertreter dieser Verbindungsklassen zur Bereitstellung eines bevorzugt eingesetzten Polyetheramins verwendet werden. Zudem sind Mischprodukte aus Polytetrahydrofuran und Amidbausteinen bekannt.

Die Polyetheramide, Polyetherester & Polyesterester werden bevorzugt so gewählt, dass Shore-Härten von A44 bis D80 erreicht werden. Besonders bevorzugt sind Shore-Härten von A40 bis A 99, insbesondere von A44 bis A96. Die Shore-Härten werden bestimmt nach der DIN 53505:1987-06.

Bevorzugt eingesetzt werden bei Polyetheramiden Produkte des Types Pebax^{®} der Firma Arkema (bspw. Pebax^{®} 2533 oder Pebax^{®} 3533) oder des Types Vestamid^{®} der Firma Evonik (bspw. Vestamid^{®} E40S3). Bevorzugt eingesetzt werden bei Polyesterestern Produkte des Types Pelprene^{®} der Firma Tojobo (bspw. Pelprene^{®} S1001 oder Pelprene^{®} P70B). Bevorzugt eingesetzt werden bei Polyetherestern Produkte des Types Elastotec^{®} der Firma BASF (bspw. Elastotec^{®} A 4512), des Types Arnitel^{®} der Firma DSM (bspw. Arnitel^{®} PL380 oder Arnitel^{®} EB463), des Typs Hytrel^{®} der Firma DuPont (bspw. Hytrel^{®} 3078), des Typs Riteflex^{®} der Firma Ticona (bspw. Riteflex^{®} 430 oder Riteflex^{®} 635) oder des Typs Ecdel^{®} der Firma Eastman Chemical (bspw. Ecdel^{®} Elastomer 9965 oder Ecdel^{®} Elastomer 9965).

### Beispiele

Die Erfindung wird durch die nachfolgenden Beispiele näher erläutert.

### Beispiel 1 (nicht erfindungsgemäß)

Als thermoplastisches Elastomer (TPE) wird ein thermoplastisches Polyurethan auf Basis von 4,4'-Diphenylmethandiisocyanat (MDI), Poly-Tetrahydrofuran (Poly-THF) und 1,4-Butandiol mit einer Bruchdehnung von mehr 600 % und einer Shore-Härte von 80 A, erhältlich zum Beispiel als Elastollan^{®} 1180A10 der BASF Polyurethans, verwendet.

100 g thermoplastische Elastomerpartikel werden als Rohgranulat in einem Autoklav-Reaktor bei einem Druck von 350 bar für 3,5 h mit N₂ bei einer Temperatur von 130°C imprägniert. Anschließend wird der Druck auf Umgebungsdruck reduziert und der Autoklav-Reaktor gekühlt.

Nach Abkühlung auf Raumtemperatur (20°C) weisen die so hergestellten expandierten thermoplastischen Elastomerpartikel eine Schüttdichte von 112 g/l auf.

### Beispiel 2 (nicht erfindungsgemäß)

Als TPE wird ein thermoplastisches Polyurethan auf Basis von 4,4'-Diphenylmethandiisocyanat (MDI), Poly-Tetrahydrofuran (Poly-THF) und 1,4-Butandiol mit einer Bruchdehnung von mehr 600 % und einer Shore-Härte von 80 A, erhältlich zum Beispiel als Elastollan^{®} 1180A10 der BASF Polyurethans, verwendet.

100 g Rohgranulat werden in einem Autoklav-Reaktor bei einem Druck von 350 bar für 3,5 h bei einer Temperatur von 130°C mit einer Treibmittelmischung, ausschließlich enthaltend N₂ und CO₂ in einem Stoffmengenverhältnis von 1:1, imprägniert. Anschließend wird der Reaktor auf 60°C gekühlt und nach Erreichen der Temperatur der Druck auf Umgebungsdruck reduziert. Daraufhin werden die teilexpandierten thermoplastischen Elastomerpartikel entnommen und in einen zweiten Reaktor überführt. Diese werden im zweiten Reaktor erneut auf 130°C, diesmal bei einem Druck von 20 bar, und in Anwesenheit von N₂ erhitzt bevor durch schlagartigen Druckabbau auf Umgebungsdruck die Partikel zu homogen expandierten thermoplastischen Elastomerpartikeln expandiert werden. Nach Abkühlung auf Raumtemperatur weisen die so hergestellten expandierten thermoplastischen Elastomerpartikel eine Schüttdichte von 125 g/l auf.

### Beispiel 3 (nicht erfindungsgemäß)

Als TPE wird ein thermoplastisches Polyurethan auf Basis von 4,4'-Diphenylmethandiisocyanat (MDI), Poly-Tetrahydrofuran (Poly-THF) und 1,4-Butandiol mit einer Bruchdehnung von mehr 800 % und einer Shore-Härte von 70 A, erhältlich zum Beispiel als Elastollan^{®} 1170A10 der BASF Polyurethans, verwendet.

100 g Rohgranulat werden in einem Autoklav-Reaktor bei einem Druck von 300 bar für 3,5 h bei einer Temperatur von 115 °C mit N₂ imprägniert. Anschließend wird der Reaktor auf 55 °C gekühlt und nach Erreichen der Temperatur der Druck auf Umgebungsdruck reduziert. Daraufhin werden die teilexpandierten thermoplastischen Elastomerpartikel entnommen und in einen zweiten Reaktor überführt. Diese werden im zweiten Reaktor erneut auf 115°C, diesmal bei einem Druck von 18 bar und in Anwesenheit von N₂, erhitzt, bevor durch schlagartigen Druckabbau auf Umgebungsdruck die Partikel zu homogen expandierten thermoplastischen Elastomerpartikeln expandiert werden. Nach Abkühlung auf Raumtemperatur weisen die so hergestellten expandierten thermoplastischen Elastomerpartikel eine Schüttdichte von 109 g/l auf.

### Beispiel 4 (nicht erfindungsgemäß).

Als TPE wird ein Styrol-Butadien-Blockcopolymer (SBC) mit den Eigenschaften eines thermoplastischen Elastomers (S-TPE), einer Bruchdehnung von mehr als 300 %, einer Shore-Härte von 84 A, einer Schmelz-Volumenfließrate (Melt volume rate, MVR bei 200 °C/5 kg) von 14 cm³/10 min, erhältlich zum Beispiel als Styroflex^{®} 2G66 der Firma Styrolution, verwendet.

100 g Rohgranulat werden in einem Autoklav-Reaktor bei einem Druck von 410 bar für 4 h bei einer Temperatur von 70°C mit N₂ imprägniert. Anschließend wird der Druck auf Umgebungsdruck reduziert und der Autoklav-Reaktor gekühlt. Nach Abkühlung auf Raumtemperatur weisen die so hergestellten expandierten thermoplastischen Elastomerpartikel eine Schüttdichte von 137 g/l auf.

### Beispiel 5 (nicht erfindungsgemäß)

Als TPE wird ein Polyetherester auf Basis von Poly-Tetrahydrofuran (Poly-THF) und Polybutylenterephthalat (PBT) mit einer Bruchdehnung von mehr 500 % und einer Shore-Härte von 90 A verwendet.

100 g Rohgranulat werden in einem Autoklav-Reaktor bei einem Druck von 380 bar für 4 h bei einer Temperatur von 150 °C mit CO₂ imprägniert. Anschließend wird der Druck auf Umgebungsdruck reduziert und der Autoklav-Reaktor gekühlt. Nach Abkühlung auf Raumtemperatur weisen die so hergestellten expandierten thermoplastischen Elastomerpartikel eine Schüttdichte von 182 g/l auf.

### Beispiel 6 (nicht erfindungsgemäß)

Als TPE wird ein Polyesterester auf Basis von 1,4-Benzdicarbonsäure, Dimethylester, 1,4-Butandiol und α-Hydro-ω-hydroxypoly(oxy-1,4-butandiyl) mit einer Bruchdehnung von mehr als 700 % und einer Shore-Härte von 96 A, zum Beispiel erhältlich als Pelprene^{®} P-70B der Firma Toyobo Co, Ltd., verwendet.

100 g Rohgranulat werden in einem Autoklav-Reaktor bei einem Druck von 380 bar für 3 h bei einer Temperatur von 140°C mit CO₂ imprägniert. Anschließend wird der Druck auf Umgebungsdruck reduziert und der Autoklav-Reaktor gekühlt. Nach Abkühlung auf Raumtemperatur weisen die so hergestellten expandierten thermoplastischen Elastomerpartikel eine Schüttdichte von 143 g/l auf.

### Beispiel 7 (nicht erfindungsgemäß)

Als TPE wird ein Polyetheramid auf Basis von flexiblem Polytetrahydrofuran und kristallinen Polyamideinheiten mit einer Bruchdehnung von mehr als 700 % und einer Shore-Härte von 77 A, zum Beispiel erhältlich als Pebax^{®} 2533SD der Firma Arkema, verwendet.

100 g Rohgranulat werden in einem Autoklav-Reaktor bei einem Druck von 170 bar für 4 h bei einer Temperatur von 135 °C mit CO₂ imprägniert. Anschließend wird der Druck auf Umgebungsdruck reduziert und der Autoklav-Reaktor gekühlt. Nach Abkühlung auf Raumtemperatur weisen die so hergestellten expandierten thermoplastischen Elastomerpartikel eine Schüttdichte von 134 g/l auf.

### Beispiel 8 (nicht erfindungsgemäß)

Als TPE wird ein Polyetherester mit einem Polyether-Weichsegment mit einer Bruchdehnung von mehr als 450 % und einer Shore-Härte von 38 D und einem MVR (190°C/ 2,16 kg) von 28 cm³/10 min, erhältlich zum Beispiel als Amitel^{®} PL380 der DSM, verwendet.

100 g Rohgranulat werden in einem Autoklav-Reaktor bei einem Druck von 350 bar für 4 h bei einer Temperatur von 200 °C mit CO₂ imprägniert. Anschließend wird der Druck auf Umgebungsdruck reduziert und der Autoklav-Reaktor gekühlt. Nach Abkühlung auf Raumtemperatur weisen die so hergestellten expandierten thermoplastischen Elastomerpartikel eine Schüttdichte von 175 g/l auf.

### Beispiel 9 (nicht erfindungsgemäß)

Als TPE wird ein Polyetherester auf Basis von harten (kristallinen) Polybutylenterephthalat-Segmenten und weichen (amorphen) Bausteinen von langkettigen Polyetherglykolen mit einer Bruchdehnung von mehr als 700%, einer Shore-Härte 30D und einer Schmelz-Massefließrate (mass flow rate, MFR) bei 190°C/2,16 kg von 5 g/10 min, zum Beispiel erhältlich als Hytrel^{®} 3078 der DuPont, verwendet.

100 g Rohgranulat werden in einem Autoklav-Reaktor bei einem Druck von 320 bar für 4 h bei einer Temperatur von 145°C mit CO₂ imprägniert. Anschließend wird der Druck auf Umgebungsdruck reduziert und der Autoklav-Reaktor gekühlt. Nach Abkühlung auf Raumtemperatur weisen die so hergestellten expandierten thermoplastischen Elastomerpartikel eine Schüttdichte von 149 g/l auf.

### Beispiel 10 (nicht erfindungsgemäß)

Als TPE wird ein thermoplastisches Polyurethan auf Basis von 4,4'-Diphenylmethandiisocyanat (MDI), Poly-Tetrahydrofuran (Poly-THF) und 1,4-Butandiol mit einer Bruchdehnung von mehr 600% und einer Shore-Härte von 80A, erhältlich zum Beispiel als Elastollan^{®} 1180A10 der BASF Polyurethane, verwendet.

100 g Rohgranulat werden in einem Autoklav-Reaktor bei einem Druck von 350 bar für 3,5 h bei einer Temperatur von 130°C mit einer Treibmittelmischung, ausschließlich enthaltend N₂ und CO₂ in einem Stoffmengenverhältnis von 1:1, imprägniert. Anschließend wird der Reaktor auf 60°C gekühlt und nach Erreichen der Temperatur der Druck auf Umgebungsdruck reduziert. Daraufhin werden die teilexpandierten thermoplastischen Elastomerpartikel entnommen, in eine perforierte, quadratische Form (Volumen 500 ml) geschüttet und in einen zweiten Reaktor überführt. Der zweite Reaktor wird auf 135°C, diesmal bei einem Druck von 20 bar, und in Anwesenheit von N₂ erhitzt. Nach schlagartigem Druckabbau auf Umgebungsdruck und Abkühlung auf Raumtemperatur kann schließlich das verschweißte Formteil mit einer Schüttdichte von 201 g/l aus der perforierten Form entnommen werden.

## Patentansprüche

1. Verfahren zur Herstellung von expandierten thermoplastischen Elastomerpartikeln, wobei thermoplastische Elastomerpartikel von einem gasförmigen Medium umgeben sind, umfassend
a) einen Imprägnierschritt,
wobei das gasförmige Medium eine Imprägniertemperatur Tₐ aufweist, der absolute Druck des gasförmigen Mediums größer als Umgebungsdruck ist und wobei ein Treibmittel in den thermoplastischen Elastomerpartikeln gelöst wird,
b) einen Expansionsschritt,
wobei die thermoplastischen Elastomerpartikel bei einer ersten Expansionstemperatur T_{b} einer Druckreduktion ausgesetzt werden und expandieren und
c) einen Verschweißungsschritt,
wobei die expandierten thermoplastischen Elastomerpartikel bei einer Verschweißungstemperatur T_{c} zu mindestens einem Formteil miteinander verschweißt werden und
wobei die thermoplastischen Elastomerpartikel aus amorphem thermoplastischem Elastomer oder teilkristallinem thermoplastischem Elastomer oder Mischungen daraus aufgebaut sind, die Imprägniertemperatur Tₐ, die erste Expansionstemperatur T_{b} und die Verschweißungstemperatur T_{c} von der Art des thermoplastischen Elastomers abhängig sind und
i. wenn das thermoplastische Elastomer amorph ist, die Imprägniertemperatur Tₐ, die erste Expansionstemperatur T_{b} und die Verschweißungstemperatur T_{c} höher sind als eine erste Grenztemperatur T_{G-40}, wobei die erste Grenztemperatur T_{G-40} 40°C unterhalb der Glasübergangstemperatur T_{G} nach DIN EN ISO 11357-2:2013-09 der nicht imprägnierten thermoplastischen Elastomerpartikel liegt,
ii. wenn das thermoplastische Elastomer teilkristallin ist, die Imprägniertemperatur Tₐ, die erste Expansionstemperatur T_{b} und die Verschweißungstemperatur T_{c} höher sind als die Glasübergangstemperatur T_{G} nach DIN EN ISO 11357-2:2013-09 der nicht imprägnierten thermoplastischen Elastomerpartikel und niedriger sind als eine zweite Grenztemperatur T_{S-5}, welche 5°C unterhalb der Schmelztemperatur T_{S} nach DIN EN ISO 11357-3:2013-04 der nicht imprägnierten thermoplastischen Elastomerpartikel liegt und
wobei die thermoplastischen Elastomerpartikel thermoplastische Polyesterelastomere, thermoplastische Copolyamide oder thermoplastische Polyurethane oder Mischungen davon enthalten,
wobei das Treibmittel CO₂ oder N₂ oder Mischungen davon enthält und kein weiteres Treibmittel enthält,
**dadurch gekennzeichnet, dass** der Imprägnierschritt a), der Expansionsschritt b) und der Verschweißungsschritt c) in einer Apparatur durchgeführt werden.

2. Verfahren nach Anspruch 1, **dadurch gekennzeichnet, dass** die thermoplastischen Elastomerpartikel Polyethercopolyamide, Polyetherester, Polyesterester oder thermoplastische Polyurethane oder Mischungen davon enthalten.

3. Verfahren nach einem der Ansprüche 1 und 2, **dadurch gekennzeichnet, dass** die thermoplastischen Elastomerpartikel thermoplastische Polyurethane enthalten.

4. Verfahren nach einem der Ansprüche 1 bis 3, **dadurch gekennzeichnet, dass** die eingesetzten thermoplastischen Elastomere eine Bruchdehnung, gemessen nach DIN EN ISO 527-2:2012-06, von mehr als 150% aufweisen.

5. Verfahren nach einem der Ansprüche 1 bis 4, **dadurch gekennzeichnet, dass** die erste Expansionstemperatur T_{b} und die Verschweißungstemperatur T_{c} gleich sind und der Expansionsschritt b) und der Verschweißungsschritt c) simultan erfolgen.

## Claims

1. A process for production of expanded thermoplastic elastomer beads wherein a gaseous medium surrounds thermoplastic elastomer beads, said process comprising
a) an impregnating step,
wherein the gaseous medium has an impregnating temperature Tₐ, the absolute pressure of the gaseous medium is greater than ambient pressure and
wherein a blowing agent is dissolved in the thermoplastic elastomer beads,
b) an expanding step,
wherein the thermoplastic elastomer beads are exposed to a pressure reduction at a first expanding temperature T_{b} and expand, and
c) a fusing step,
wherein the expanded thermoplastic beads are fused together at temperature T_{c} to form at least one shaped part, and
wherein the thermoplastic elastomer beads are constructed of amorphous thermoplastic elastomer or partly crystalline thermoplastic elastomer, or mixtures thereof, the impregnating temperature Tₐ, the first expanding temperature T_{b} and the fusing temperature T_{c} depend on the nature of the thermoplastic elastomer in that
i. when the thermoplastic elastomer is amorphous, the impregnating temperature Tₐ, the first expanding temperature T_{b} and the fusing temperature T_{c} are higher than a first limiting temperature T_{G-40}, wherein the first limiting temperature T_{G-40} is 40°C below the glass transition temperature T_{G}, according to DIN EN ISO 11357-2:2013-09, of the nonimpregnated thermoplastic elastomer beads,
ii. when the thermoplastic elastomer is partly crystalline, the impregnating temperature Tₐ, the first expanding temperature T_{b} and the fusing temperature T_{c} are higher than the glass transition temperature T_{G}, according to DIN EN ISO 11357-2:2013-09, of the nonimpregnated thermoplastic elastomer beads and lower than a second limiting temperature T_{S-5} which is 5°C below the melting temperature Ts, according to DIN EN ISO 11357-3:2013-04, of the nonimpregnated thermoplastic elastomer beads and
wherein the thermoplastic elastomer beads comprise thermoplastic polyester elastomers, thermoplastic copolyamides or thermoplastic polyurethanes, or mixtures thereof,
wherein the blowing agent comprises CO₂ or N₂, or mixtures thereof and comprises no further blowing agent,
wherein said impregnating step a), said expanding step b) and said fusing step c) are carried out in one apparatus.

2. The process according to claim 1 wherein the thermoplastic elastomer beads comprise polyethercopolyamides, polyether esters, polyesteresters or thermoplastic polyurethanes, or mixtures thereof.

3. The process according to either of claims 1 and 2 wherein the thermoplastic elastomer beads comprise thermoplastic polyurethanes.

4. The process according to any of claims 1 to 3 wherein the thermoplastic elastomers used have an elongation at break, measured to DIN EN ISO 527-2:2012-06, of more than 150%.

5. The process according to any of claims 1 to 4 wherein said first expanding temperature T_{b} and said fusing temperature T_{c} are identical and said expanding step b) and said fusing step c) are carried out simultaneously.

## Revendications

1. Procédé de fabrication de particules élastomères thermoplastiques expansées, selon lequel des particules élastomères thermoplastiques sont entourées par un milieu gazeux, comprenant :
a) une étape d'imprégnation,
le milieu gazeux présentant une température d'imprégnation Tₐ, la pression absolue du milieu gazeux étant supérieure à la pression ambiante, et un agent gonflant étant dissous dans les particules élastomères thermoplastiques,
b) une étape d'expansion,
les particules élastomères thermoplastiques étant exposées à une réduction de pression à une première température d'expansion T_{b} et expansées, et
c) une étape de soudage,
les particules élastomères thermoplastiques expansées étant soudées les unes avec les autres en au moins une pièce moulée à une température de soudage T_{c}, et
les particules élastomères thermoplastiques étant formées à partir d'un élastomère thermoplastique amorphe ou d'un élastomère thermoplastique partiellement cristallin ou de mélanges de ceux-ci, la température d'imprégnation Tₐ, la première température d'expansion T_{b} et la température de soudage T_{c} étant dépendantes du type d'élastomère thermoplastique, et
i. lorsque l'élastomère thermoplastique est amorphe, la température d'imprégnation Tₐ, la première température d'expansion T_{b} et la température de soudage T_{c} étant supérieures à une première température limite T_{G-40}, la première température limite T_{G-40} étant située 40 °C en dessous de la température de transition vitreuse T_{G} selon DIN EN ISO 11357-2:2013-09 des particules élastomères thermoplastiques non imprégnées,
ii. lorsque l'élastomère thermoplastique est partiellement cristallin, la température d'imprégnation Tₐ, la première température d'expansion T_{b} et la température de soudage T_{c} étant supérieures à la température de transition vitreuse T_{G} selon DIN EN ISO 11357-2:2013-09 des particules élastomères thermoplastiques non imprégnées, et étant inférieures à une deuxième température limite T_{S-5}, qui se situe 5 °C en dessous de la température de fusion Ts selon DIN EN ISO 11357-3:2013-04 des particules élastomères thermoplastiques non imprégnées, et
les particules élastomères thermoplastiques contenant des élastomères de polyester thermoplastiques, des copolyamides thermoplastiques ou des polyurethanes thermoplastiques ou des mélanges de ceux-ci,
l'agent gonflant contenant CO₂ ou N₂ ou des mélanges de ceux-ci et aucun autre l'agent gonflant,
**caractérisé en ce que** l'étape d'imprégnation a), l'étape d'expansion b) et l'étape de soudage c) sont réalisées dans un appareil.

2. Procédé selon la revendication 1, **caractérisé en ce que** les particules élastomères thermoplastiques contiennent des copolyamides de polyéther, des polyétheresters, des polyester-esters ou des polyurethanes thermoplastiques ou des mélanges de ceux-ci.

3. Procédé selon l'une quelconque des revendications 1 et 2, **caractérisé en ce que** les particules élastomères thermoplastiques contiennent des polyurethanes thermoplastiques.

4. Procédé selon l'une quelconque des revendications 1 à 3, **caractérisé en ce que** les élastomères thermoplastiques utilisés présentent un allongement à la rupture, mesuré selon DIN EN ISO 527-2:2012-06, de plus de 150 %.

5. Procédé selon l'une quelconque des revendications 1 à 4, **caractérisé en ce que** la première température d'expansion T_{b} et la température de soudage T_{c} sont identiques et l'étape d'expansion b) et l'étape de soudage c) ont lieu simultanément.
